# EUROPEAN PATENT SPECIFICATION

(11) **EP 3 157 655 B1**
(45) Date of publication and mention of the grant of the patent: **09.05.2018**
(21) Application number: 15753750.7
(22) Date of filing: 16.06.2015
(51) Int. Cl.: B01D 53/10, B01D 53/30, B01D 53/50, B01D 53/83

(54) **SYSTEM FOR TREATING FUMES GENERATED BY WASTE DISPOSAL PLANTS**
SYSTEM ZUR BEHANDLUNG VON DURCH ABFALLENTSORGUNGSANLAGEN ERZEUGTEN DÄMPFEN
SYSTÈME DE TRAITEMENT DE FUMÉES GÉNÉRÉES PAR DES INSTALLATIONS D'ÉLIMINATION DES DÉCHETS

(30) Priority: 17.06.2014 IT TO20140478
(43) Date of publication of application: 26.04.2017
(73) Proprietor: TM.E. S.P.A. Termomeccanica Ecologia, 19126 La Spezia (IT)
(72) Inventor: CALVANI, Stefano, I-19126 La Spezia (IT)
(74) Representative: Vitillo, Giuseppe
(86) International application number: PCT/IB2015/054551
(87) International publication number: WO 2015/193814

(56) References cited:
- EP-A1- 1 008 377
- EP-A2- 0 103 881
- WO-A2-02/09852
- DE-A1- 3 318 880
- DE-A1- 19 517 863
- US-A1- 2013 334 466

## Description

The present invention relates to a system for treating fumes generated by waste disposal plants, wherein waste combustion processes take place in waste-to-energy plants using on-grid combustion technology.

The plant to which the control system is applied is a waste disposal plant in which said waste is burned and then disposed of as ashes and gases, which must be purified prior to going into the atmosphere.

Such plants comprise a combustion chamber wherein waste is burned on a combustion grid, through which a suitable quantity of air is supplied. The combustion grid is suitable for supporting and advancing the waste during its combustion, while at the same time allowing for forced blowing of combustion air under the waste bed.

The grid constitutes the lower part of the combustion chamber. The combustion chamber physically begins immediately above the grid.

In such plants, the waste combustion processes are oriented towards the reduction of the environmental impact of the plant through the achievement of lower levels of pollutants and lower quantities of fumes exiting through the chimney. Document WO 02/09852 discloses a system for the removal of targeted pollutants. Process parameters are controlled by electronic controls to monitor and adjust pollutant removal efficiencies. Document EP0103881 is also disclosing a system where the feed control of the additives to remove the pollutants is done in a control loop in view of the signals from the pollutant detectors at several points in the system. Another target is to reduce the consumption of water required for the treatment, considering that the hydric resource is becoming a critical aspect. This leads to a reduction of the liquid effluents produced, which must mandatorily be treated, and to improved reliability and availability of the fume treatment system.

In the last decade, there has been a tendency towards replacing wet fume treatments with dry ones.

Wet or semi-wet/semi-dry fume treatment technologies are characterized, in fact, by high water consumption and/or by the production of large quantities of effluents to be treated.

The dry fume treatment technology with injection of sodium bicarbonate or high-reactivity lime, instead, offers many advantages over the other treatment technologies currently in use in the industry, because it:
- minimizes the gas volume going into the atmosphere;
- eliminates the production of liquid effluents, resulting in null water consumption;
- eliminates the problem of the formation of wreaths of smoke at the chimney;
- maximizes heat recovery from the fumes;
- achieves acceptable levels of pollutant emissions;
- makes the treatment process less complex, resulting in lower operating costs.

The following will show the results of a comparative analysis of applicable fume lines.

The fume treatment technologies currently available on the market can, on average, reach performance levels in terms of abatement of acid gases (HCl, SOx, HF) as shown in the following graph.

The data shown in the following graph have been extracted from the European guidelines entitled "Bref waste to incineration". The following fume treatment technologies have been compared:
- Wet treatment (blue colour)
- Semi-wet treatment (yellow colour)
- Dry treatment (green colour)

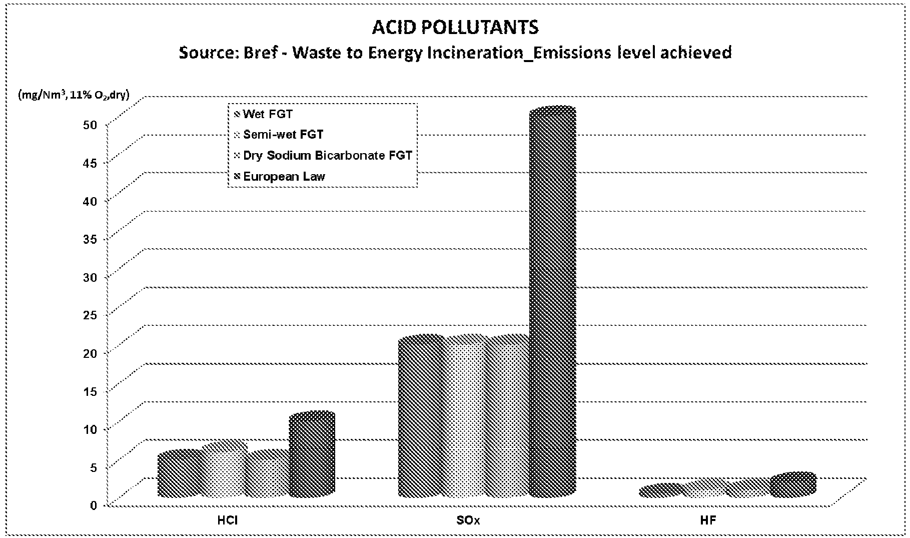

The technologies available on the market can, on average, achieve comparable acid-gas emission values, which are approx. lower by 50% than those set by law.

The present invention lies within this frame, allowing the achievement of acid-gas emission levels that are much lower than both the legal limits and those attainable by the technologies currently available on the market.

The following graph compares, in fact:
- law limits (red colour)
- emission limits that can be achieved, on average, by the technologies available on the market (blue colour)
- emission values attainable by using the fume treatment technology proposed by Termomeccanica (green colour)

The values that can be attained by the present fume treatment system are lower by approx. 90% than the law limits, as opposed to the reduction by approx. 50% that can be achieved by means of the other technologies.

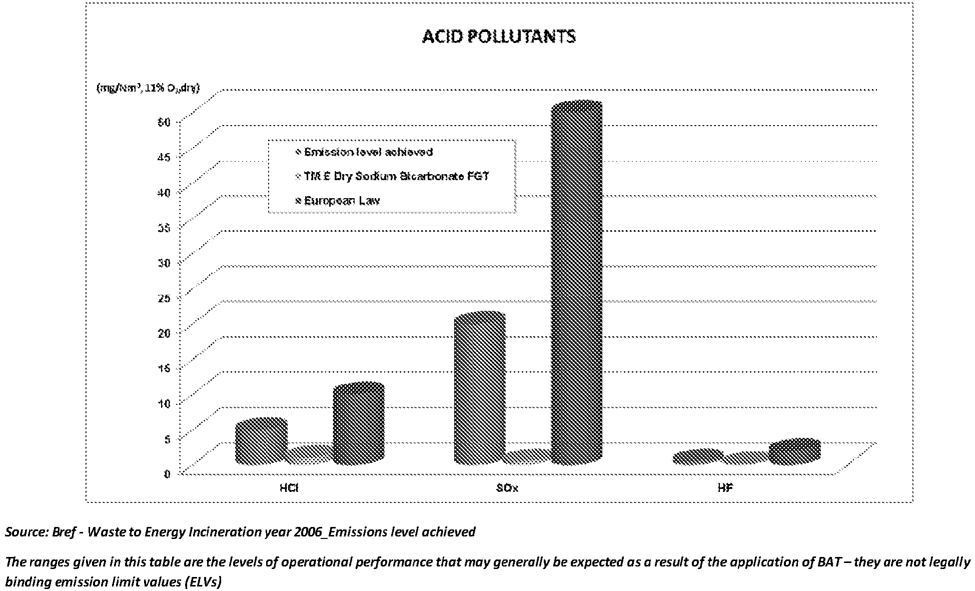

The present invention relates to a dry-type multistage fume treatment system or line for removal of acid gases from fumes generated by waste-to-energy plants using on-grid combustion technologies. The types of waste that can be treated by the plant are the following: solid urban waste and the like, biomass and sludge.

One aspect of the present invention relates to a system having the features set out in the appended claim 1.

The features and advantages of the system according to the present invention will become apparent from the following exemplificative and non-limiting description with reference to the annexed drawings, wherein:
- Figure 1 is a general diagram of a waste treatment plant as used in the present invention: dry-type multi-stage fume treatment system for acid-gas removal (MSD);

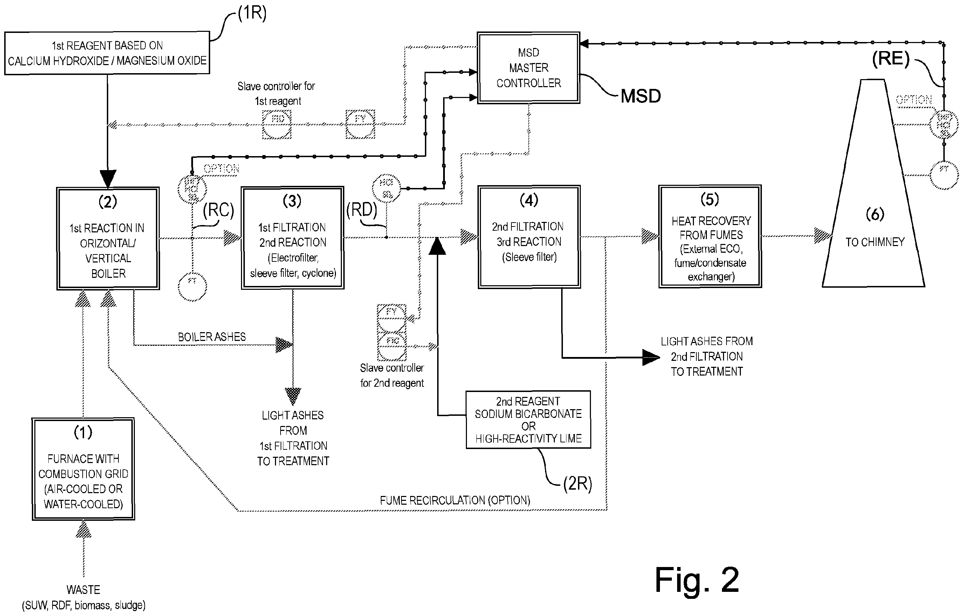

- Figure 2 is a block diagram of the system according to the present invention, applied to the plant of Figure 1;
- Figure 3 is a logic diagram of the operation of the electronic processing and automatic control unit of the system according to the present invention.

With reference to the above-mentioned drawings, the present invention applies to waste-to-energy plants for treating solid urban waste and the like, such as civil purification sludge, biomass, RDF, hospital waste, etc. by using on-grid combustion technology, and relates to a dry-type multi-stage fume treatment system for acid-gas removal (MSD).

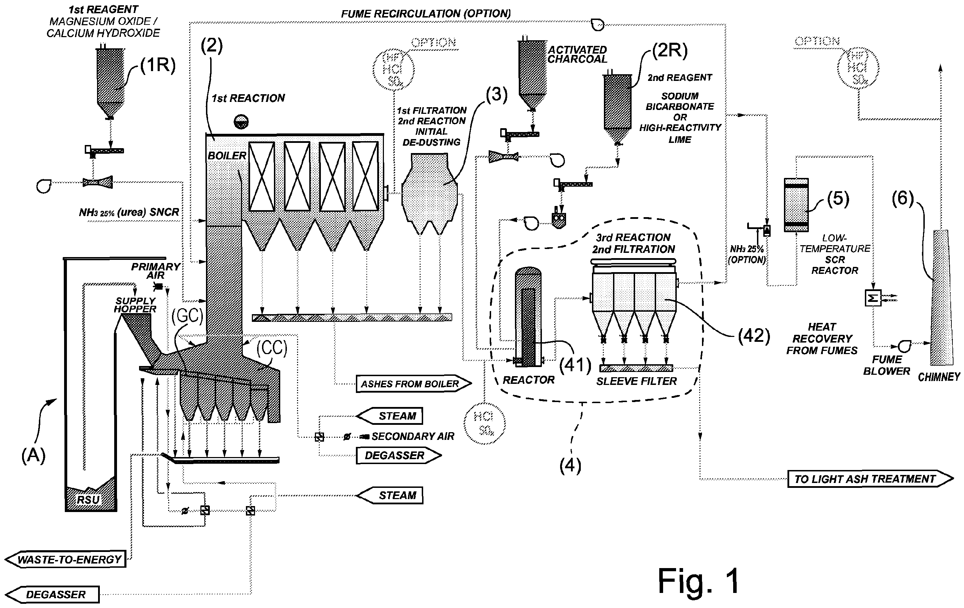

One example of a plant to which the present invention applies is shown in Figure 1, and comprises a feeding system A for feeding waste to a combustion chamber CC in which the waste is burned, arranged on a combustion grid GC through which an adequate quantity of air is supplied. The combustion grid is suitable for supporting and advancing the waste during its combustion, while at the same time allowing for forced blowing of combustion air under the waste bed.

The grid constitutes the lower part of the combustion chamber. The combustion chamber physically begins immediately above the grid. The chamber or furnace is provided with an air-cooled or water-cooled mobile grid, depending on the caloric power of the input waste. During the combustion process, which occurs at temperatures in the range of 1,100 to 1,300°C, fumes are generated which contain pollutants that must be purified prior to going into the atmosphere.

Downstream the combustion chamber or furnace the system of the present invention is arranged, which receives the fumes generated by combustion. Said system comprises a steam boiler 2, wherein combustion fumes are cooled prior to entering a depuration section. Said recovery boiler, extending either horizontally or vertically, is preferably of the natural circulation type for steam production.

The boiler includes means for injecting a first solid reagent 1R, preferably based on calcium hydroxide (magnesium oxide) within a slot comprised between 800 and 1,000°C; the purpose of this reagent is to execute a first reaction stage directly in said boiler 2 in order to remove acid pollutants such as HCL, SOx, HF. The injection of said first reagent provides a preliminary abatement of the acid gases, thus allowing their concentration to be controlled at the boiler outlet.

The system further comprises a first filtration stage 3 including a sleeve filter or electrofilter or cyclone, in which the reaction for acid-gas de-acidification is completed by means of said first reagent based on calcium hydroxide / magnesium oxide. In this stage, boiler ashes and reaction products are also removed. These dusts can the be treated separately and made inert.

Between said boiler and said first filtering stage there are first means for continuously detecting RC the acid gases, such as HCL, SOx, HF (optional), contained in the fumes exiting boiler 2.

At the exit of said first filtering stage there are also second means for continuously detecting RD the acid pollutants, such as HCL, SOx, contained in the fumes exiting said first stage.

Downstream of the first filtering stage there are means for injecting 2R a second high-efficiency reagent, e.g. sodium bicarbonate or high-reactivity lime, and a second filtering stage 4, comprising a sleeve filter, in which the acid-gas de-acidification reaction is completed by means of said second high-efficiency reagent. In this second stage, the resulting reaction products are also removed. These dusts can the be treated separately and made inert.

The second alkaline solid reagent is a high-efficiency reagent, such as sodium bicarbonate or high-reactivity lime, within a temperature slot comprised between 140 and 240°C, the purpose of which is to execute a third reaction stage and to complete the acid-gas removal process. This third reaction takes place in a reaction tower 41 and a next sleeve filter 42.

The injection of said second reagent brings about the recovery of sensible heat from the fumes through an external economizer and/or a fume/condensate exchanger 5 comprising also means for removing NOx nitrogen oxides, of the SNCR or SCR type, which can be inserted along the path of the fumes towards the chimney.

The system ends with a conventional fume chimney 6. Downstream of said chimney, third fume detection means RE are provided.

MSD system comprises an automatic control unit, managed by a master controller that receives signals from the first, second and third detection means and controls, through respective (slave) controllers, the dosage of both reagents in the system.

This unit is adapted to automatically adjust the reagents for keeping the values of the acid gases in the chimney compliant with a principle of operation, wherein a master controller and two slave controllers are used for adjusting the reagents as described below.

The second high-efficiency reagent, whether sodium bicarbonate or high-reactivity lime, is dosed in conditions close to the stoichiometric reaction ratio.

The dosage of the first reagent, based on calcium hydroxide / magnesium oxide, is such as to keep the values measured at the chimney outlet to setpoint values set in the master controller.

In case of a difference outside a dead band between the values measured at the chimney, the measurement signals and the predefined setpoint values, the master controller will only act upon the slave controller of the second reagent.

Electronic control unit MSD essentially comprises a master controller comprising PID controllers for each acid pollutant, i.e. HCl / SOx / HF (optional), which receive chimney measurement signals PV, required setpoint values, a logic selector defining which slave controller is to be acted upon by the master controller, and a slave controller for the first reagent that operates on the basis of the measurement signals of the HCl, SOx, HF (optional) boiler output parameters and of the HCl, SOx, HF (optional) chimney parameters. The unit further comprises a slave controller for the second reagent, which operates on the basis of the HCl, SOx parameters at the exit of the first filtering stage and of the HCl, SOx, HF (optional) chimney parameters.

The technology of the present invention allows using a dry fume line comprising multiple reaction and filtration stages. Such a line employs two solid reagents having different characteristics and chemical-physical properties for effecting a multi-stage reaction for removal of acid gases along the path of the fumes from the furnace to the chimney, thus carrying out several filtration/reaction stages to reduce the excess reagents, and hence the dusts produced, while allowing the latter to be differentiated for subsequent treatments.

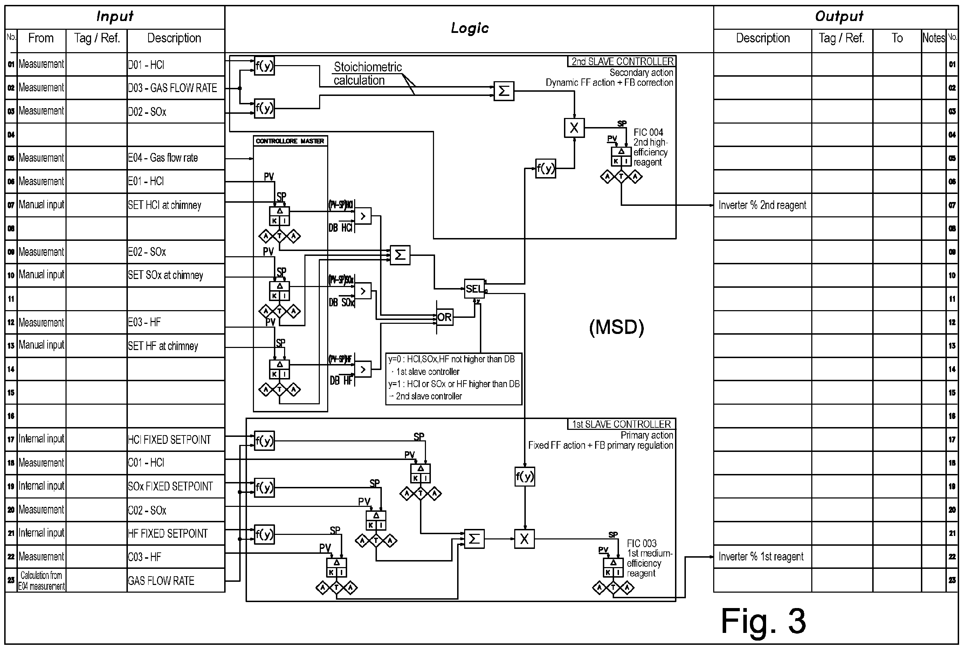

The present invention uses an automatic control based on multi-loop technology for controlling the reagents, monitoring the acid pollutants in each reaction stage in accordance with the simplified architecture shown in the diagram of Figure 3, which essentially comprises:
∘ a master controller comprising PID regulators for each acid pollutant, i.e. HCl / SOx / HF (optional), which receives chimney measurement signals PV and required setpoint values;
∘ a logic selector defining which slave controller is to be acted upon by the master controller;
∘ a slave controller for the first reagent based on calcium hydroxide / magnesium oxide, with feedback primary regulation + fixed feedforward action based on the measurement signals of the HCl, SOx, HF (optional) parameters at the exit of boiler (C) and the HCl, SOx, HF (optional) parameters at chimney (E), according to the regulation diagram shown in Figure 3;
∘ a slave controller for the second reagent, i.e. sodium bicarbonate or high-reactivity lime, with dynamic feedforward + secondary feedback action based on the measurement signals of the HCl, SOx, parameters (D) at the exit of the first filtering stage and the HCl, SOx, HF (optional) parameters at chimney (E), according to the regulation diagram shown in Figure 3.

The main object of the present invention is to:
- use reagents having different properties and efficiency for improved selectivity of a wider range of pollutants and lower operating and maintenance costs, while optimizing the environmental performance in terms of reduction of the levels of emission of acid gases into the atmosphere;
- minimize the environmental impact in terms of effluents produced, water consumption, and residues at the plant exit,
- maximize the reliability and security of the process in terms of availability and performance of the treatment process,
- maximize the flexibility and certainty of the treatment with variable pollutant contents,
- maximize the energetic performance in terms of heat recovery efficiency and minimize electric consumption.

## Claims

1. System for treating fumes generated by waste disposal plants, wherein waste combustion processes take place in waste-to-energy plants; said system comprising:
• a steam boiler (2), wherein combustion fumes are cooled prior to entering a depuration section;
• a first filtering stage (3), comprising a sleeve filter or electrofilter or cyclone that receives the fumes exiting the boiler (2);
• a second filtering stage (4), comprising a sleeve filter arranged downstream of said first filtering stage (3); and
• first injection means (1R) configured for injecting into the boiler (2) a first alkaline solid reagent capable of executing a first reaction stage for reducing the acid gases directly in said boiler, and a second reaction stage for further reducing the acid gases in the first filtering stage;
• second injection means (2R) configured for injecting a second alkaline solid reagent between the first and the second filtering stages, said second alkaline solid reagent being capable of executing a third reaction stage in the second filtering stage and completing the acid-gas removal process;
• a chimney (6) downstream of said second filtering stage (4); said plant essentially comprises a combustion chamber (CC) in which waste is burned, arranged on a combustion grid (GC) through which an adequate quantity of air is supplied; and said system further comprises:
• a heat recovery section (5) downstream of said second filtering stage (4);
• first detecting means (RC) situated between said boiler (2) and said first filtering stage (3) and configured for continuously detecting the acid gases contained in the fumes exiting the boiler,
• second detecting means (RD) configured for continuously detecting the acid pollutants contained in the fumes exiting said first filtering stage;
• third detecting means (RE) configured for detecting the fumes (RE) downstream of said chimney (6);
• a processing unit (MSD) capable of receiving signals from the first, second and third detection means, and capable of controlling, through respective controllers, the injection means (1R, 2R); said processing unit (MSD) being configured for dosing, through said injection means (1R, 2R), the two reagents so as to automatically adjust the injection of reagents into the fume line to keep at desired values the acid pollutants entering the chimney;
wherein said unit is programmed in such a way as to comprise a master controller, two slave controllers, and a logic selector that allows the master controller to selectively select each slave controller, each slave controller being adapted to adjust the quantity of a respective reagent, respectively the first or the second one;
wherein said master controller comprises PID regulators for each acid pollutant, which receive measurement signals from the chimney and predefined setpoint values.

2. System according to claim 1, wherein said first reagent is calcium hydroxide / magnesium oxide.

3. System according to claim 1, wherein said second reagent is sodium bicarbonate or high-reactivity lime.

4. System according to claim 1, wherein said second filtering stage comprises an external economizer and/or a fume/condensate exchanger (5) comprising also means for removing NOx nitrogen oxides, of the SNCR or SCR type, which can be inserted along the path of the fumes towards the chimney.

5. System according to claim 1, wherein the slave controller of the first reagent operates on the basis of the measurement signals of the boiler output parameters and of the chimney parameters.

6. System according to claim 1, wherein the slave controller operates on the basis of the measurement signals of the first filtering stage output parameters and of the chimney parameters.

## Patentansprüche

1. System zur Behandlung von durch Abfallentsorgungsanlagen erzeugten Abgasen, wobei Abfallverbrennungsprozesse in Müllheizkraftwerken stattfinden, umfassend:
• einen Dampfkessel (2), wobei Verbrennungsabgase vor dem Eintritt in einen Ausscheidungsabschnitt gekühlt werden;
• eine erste Filterstufe (3) mit einem Hülsenfilter oder Elektrofilter oder Fliehkraftabscheider, der die aus dem Kessel (2) austretenden Abgase aufnimmt;
• eine zweite Filterstufe (4) mit einem Hülsenfilter, der der ersten Filterstufe (3) nachgeschaltet ist; und
• eine erste Einspritzeinrichtung (1R), die zum Einspritzen eines ersten alkalischen festen Reagens in den Kessel (2) eingerichtet ist, das eine erste Reaktionsstufe zum Reduzieren der Sauergase direkt in dem Kessel und eine zweite Reaktionsstufe zum weiteren Reduzieren der Sauergase in der ersten Filterstufe ausführen kann;
• eine zweite Einspritzeinrichtung (2R), die zum Einspritzen eines zweiten alkalischen festen Reagens zwischen der ersten und der zweiten Filterstufe eingerichtet ist, wobei das zweite alkalische feste Reagens eine dritte Reaktionsstufe in der zweiten Filterstufe ausführen und den Sauergas-Entfemungsprozess abschließen kann;
• einen Kamin (6), der der zweiten Filterstufe (4) nachgeschaltet ist;
• wobei das Kraftwerk im Wesentlichen eine Brennkammer (CC) aufweist, in der Abfall verbrannt wird, der auf einem Verbrennungsgitter (GC) angeordnet ist, durch das eine ausreichende Menge Luft zugeführt wird; und wobei das System weiter umfasst:
• einen Wärmerückgewinnungsabschnitt (5), der der zweiten Filterstufe (4) nachgeschaltet ist;
• eine erste Erfassungseinrichtung (RC), die sich zwischen dem Kessel (2) und der ersten Filterstufe (3) befindet und zum kontinuierlichen Erfassen der in den aus dem Kessel austretenden Abgasen enthaltenen Sauergase eingerichtet ist;
• eine zweite Erfassungseinrichtung (RD), die zum kontinuierlichen Erfassen der in den aus der ersten Filterstufe austretenden Abgasen enthaltenden sauren Schadstoffe eingerichtet ist;
• eine dritte Erfassungseinrichtung (RE), die zum Erfassen der Abgase stromabwärts des Kamins (6) eingerichtet sind;
• eine Verarbeitungseinheit (MSD), die zum Empfangen von Signalen von der ersten, der zweiten und der dritten Erfassungseinrichtung und zum Steuern der jeweiligen Einspritzeinrichtung (1R, 2R) über entsprechende Steuerungen eingerichtet ist; wobei die Verarbeitungseinheit (MSD) zum Dosieren der beiden Reagenzien durch die Einspritzeinrichtungen (1R, 2R) eingerichtet ist, um das Einspritzen der Reagenzien in die Abgasleitung automatisch einzustellen, um die in den Kamin eintretenden sauren Schadstoffe auf den gewünschten Werten zu halten;
wobei die Einheit dazu programmiert ist, eine Master-Steuerung, zwei Slave-Steuerungen und einen Logikwähler aufzuweisen, der es der Master-Steuerung ermöglicht, selektiv jede Slave-Steuerung auszuwählen, wobei jede Slave-Steuerung dazu angepasst ist, die Menge eines jeweiligen Reagens, entsprechend das erste oder zweite davon, einzustellen;
wobei die Master-Steuerung für jeden sauren Schadstoff einen PID-Regler aufweist, die Messsignale von dem Kamin und vordefinierte Sollwerte empfangen.

2. System nach Anspruch 1, wobei das erste Reagens Calciumhydroxid / Magnesiumoxid ist.

3. System nach Anspruch 1, wobei das zweite Reagens Natriumbikarbonat oder hochreaktiver Kalk ist.

4. System nach Anspruch 1, wobei die zweite Filterstufe einen externen Vorwärmer und/oder einen Abgas-/Kondensat-Austauscher (5) aufweist, der auch Einrichtungen zum Entfernen von NOx-Stickoxiden des SNCR- oder SCR-Typs aufweist, die entlang des Weges der Abgase hin zu dem Kamin einführbar sind.

5. System nach Anspruch 1, wobei die Slave-Steuerung des ersten Reagens auf Basis der Messsignale der Kesselausgangsparameter und der Kaminparameter arbeitet.

6. System nach Anspruch 1, wobei die Slave-Steuerung auf Basis der Messsignale der Ausgangsparameter der ersten Filterstufe und der Kaminparameter arbeitet.

## Revendications

1. Système de traitement des fumées générées par des installations d'élimination des déchets, dans lequel des processus de combustion de déchets sont conduits dans des installations de transformation de déchets en énergie ; ledit système comprenant :
. une chaudière à vapeur (2), dans laquelle les fumées de combustion sont refroidies avant d'entrer dans une section d'épuration ;
. un premier étage filtrant (3), comprenant un filtre à manches ou un électro-filtre ou un cyclone qui reçoit les fumées sortant de la chaudière (2) ;
. un deuxième étage filtrant (4), comprenant un filtre à manches agencé en aval dudit premier étage filtrant (3) ; et
. des premiers moyens d'injection (1R) configurés pour injecter, dans la chaudière (2), un premier réactif solide alcalin capable de mettre en oeuvre un premier étage de réaction visant à réduire les gaz acides directement dans ladite chaudière, et un deuxième étage de réaction visant à encore réduire les gaz acides dans le premier étage filtrant ;
. des deuxièmes moyens d'injection (2R) configurés pour injecter un deuxième réactif solide alcalin entre les premier et deuxième étages filtrants, ledit deuxième réactif solide alcalin étant capable de mettre en oeuvre un troisième étage de réaction dans le deuxième étage filtrant et de terminer le processus d'élimination des gaz acides
. une cheminée (6) en aval dudit deuxième étage filtrant (4) ;
ladite installation comprend essentiellement une chambre de combustion (CC) dans laquelle des déchets sont brûlés, agencée sur une grille de combustion (GC) à travers laquelle une quantité d'air adéquate est alimentée, et
ledit système comprend en outre :
. une section de récupération de chaleur (5) en aval dudit deuxième étage filtrant (4) ;
. un premier moyen de détection (RC) situé entre ladite chaudière (2) et ledit premier étage filtrant (3) et configuré pour détecter, en continu, les gaz acides contenus dans les fumées qui sortent de la chaudière,
. un deuxième moyen de détection (RD) configuré pour détecter en continu les polluants acides contenus dans les fumées qui sortent dudit premier étage filtrant ;
. un troisième moyen de détection (RE) configuré pour détecter les fumées (RE) en aval de ladite cheminée (6) ;
. une unité de traitement (MSD) capable de recevoir des signaux provenant des premier, deuxième et troisième moyens de détection, et capable de contrôler, par l'intermédiaire de contrôleurs respectifs, les moyens d'injection (1R, 2R) ; ladite unité de traitement (MSD) étant configurée pour doser, par l'intermédiaire desdits moyens d'injection (1R, 2R), les deux réactifs de façon à régler automatiquement l'injection de réactifs dans la ligne des fumées pour conserver aux valeurs souhaitées les polluants acides qui pénètrent dans la cheminée ;
dans lequel ladite unité est programmée de manière à comprendre un contrôleur maitre, deux contrôleurs esclaves, et un sélecteur logique qui permet au contrôleur maitre de sélectionner, de manière sélective, chaque contrôleur esclave, chaque contrôleur esclave étant conçu pour ajuster la quantité d'un réactif respectif, respectivement le premier ou le second ;
dans lequel ledit contrôleur maitre comprend des régulateurs PID pour chaque polluant acide, qui reçoivent des signaux de mesure provenant de la cheminée et des valeurs de consigne prédéfinies.

2. Système selon la revendication 1, dans lequel ledit premier réactif est de l'hydroxyde de calcium/oxyde de magnésium.

3. Système selon la revendication 1, dans lequel ledit second réactif est du bicarbonate de sodium ou de la chaux à haute réactivité.

4. Système selon la revendication 1, dans lequel ledit deuxième étage filtrant comprend un économiseur externe et/ou un échangeur fumées/condensat (5) comprenant également des moyens d'élimination des oxydes nitriques NOx, du type SNCR (réduction non catalytique sélective) ou SCR (réduction catalytique sélective), qui peuvent être insérés le long du trajet des fumées vers la cheminée.

5. Système selon la revendication 1, dans lequel le contrôleur esclave du premier réactif fonctionne en fonction des signaux de mesure des paramètres de sortie de la chaudière et des paramètres de la cheminée.

6. Système selon la revendication 1, dans lequel le contrôleur esclave fonctionne en fonction des signaux de mesure des paramètres de sortie du premier étage filtrant et des paramètres de la cheminée.
